# EUROPÄISCHE PATENTSCHRIFT

(11) **EP 1 404 478 B1**
(45) Veröffentlichungstag und Bekanntmachung des Hinweises auf die Patenterteilung: **24.11.2004**
(21) Anmeldenummer: 02767161.9
(22) Anmeldetag: 01.07.2002
(51) Int. Cl.: B23K 3/06

(54) **LÖTDÜSE ZUM WELLENLÖTEN VON LEITERPLATTEN**
SOLDERING NOZZLE FOR WAVE SOLDERING PRINTED CIRCUIT BOARDS
BUSE A BRASER DESTINEE AU BRASAGE A LA VAGUE DE CARTES DE CIRCUITS IMPRIMES

(30) Priorität: 03.07.2001 DE 10132029
(43) Veröffentlichungstag der Anmeldung: 07.04.2004
(73) Patentinhaber: Seho Systemtechnik GmbH, 97892 Kreuzwertheim (DE)
(72) Erfinder: DIEHM, Jürgen, 97877 Wertheim-Dertingen (DE); HORCHER, Manfred, 97877 Wertheim (DE); WALTER, Markus, 97877 Wertheim (DE)
(74) Vertreter: Bardehle, Heinz, Dipl.-Ing.
(86) Internationale Anmeldenummer: PCT/EP2002/007246
(87) Internationale Veröffentlichungsnummer: WO 2003/004208

(56) Entgegenhaltungen:
- EP-A- 0 159 425
- EP-A- 0 278 166
- DE-A- 10 026 067
- US-A- 5 368 222

## Beschreibung

Die Erfindung bezieht sich auf eine Lötdüse zum Wellenlöten von Leiterplatten mit elektrischen Bauelementen, die quer zur Förderrichtung der Leiterplatten angeordnete Reihen von Lotaustrittsöffnungen aufweist, die in Förderrichtung von Reihe zu Reihe zueinander versetzt liegen.

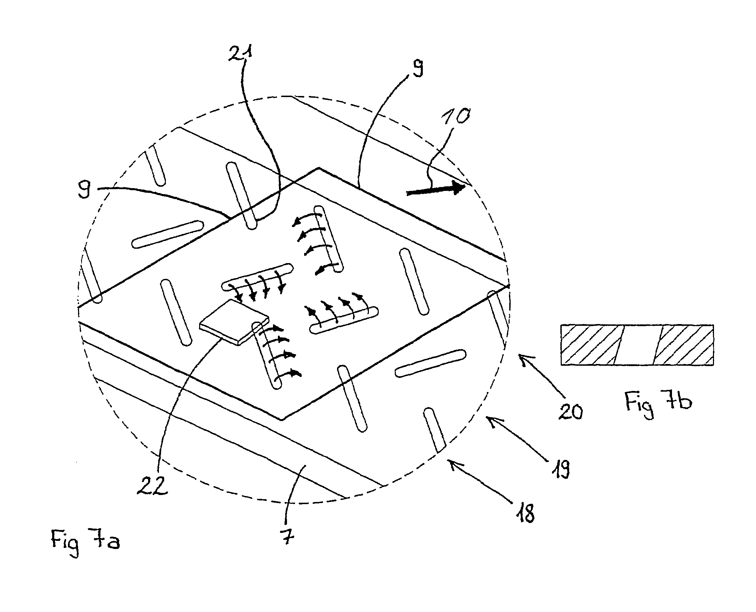

Eine derartige Lötdüse ist aus der europäischen Patentanmeldung 0159425 bekannt. Gemäß Figur 7 dieser Druckschrift weist diese Lötdüse zwei Reihen von runden Lotaustrittsöffnungen auf. Jede Reihe ist senkrecht zur Förderrichtung der zu lötenden Leiterplatten angeordnet, wobei die Lotaustrittsöffnungen von Reihe zu Reihe versetzt zueinander liegen. Eine Abwandlung dieser Anordnung von Lotaustrittsöffnungen ist in Figur 8 bzw. Figur 9 dieser Druckschrift dargestellt. Die Lötdüsen gemäß Figur 8 und Figur 9 enthalten als Lotaustrittsöffnungen Schlitze, die als Verbindungen zwischen jeweils zwei in Förderrichtung hintereinander angeordneten runden Lotaustrittsöffnungen gemäß der vorstehend genannten Figur 7 aufzufassen sind, womit an die Stelle der zwei Reihen von runden Lotaustrittsöffnungen gemäß der Figur 7 eine einzige Reihe von Schlitzen tritt, die sich in einem Winkel zur Förderrichtung erstrecken, der etwa dem Winkel einer Verbindung von zwei hintereinander angeordneten runden Lotaustrittsöffnungen gemäß der Figur 7 entspricht.

Eine ähnliche Gestaltung einer Lötdüse ist in Figur 8 der deutschen Patentschrift 4329000 dargestellt, bei der drei Reihen von Lotaustrittsöffnungen vorhanden sind, die ähnlich der Anordnung gemäß der vorstehend genannten Figur 7 der europäischen Patentanmeldung 0159425 von Reihe zu Reihe versetzt zueinander liegen.

Der Erfindung liegt die Aufgabe zugrunde, eine Lötdüse zum Wellenlöten von Leiterplatten mit elektrischen Bauelementen zu schaffen, deren Lotaustrittsöffnungen so angeordnet sind, dass sich eine besonders intensive Umspülung der Anschlussstellen der auf den Leiterplatten angeordneten elektrischen Bauelemente ergibt. Erfindungsgemäß geschieht dies durch eine Gestaltung und Anordnung von Lotaustrittsöffnungen, bei der mindestens zwei Reihen von jeweils als Schlitze ausgebildeten Lotaustrittsöffnungen vorgesehen sind und in jeder Reihe die Schlitze parallel zueinander in Schräglage zur Förderrichtung angeordnet sind, wobei von Reihe zu Reihe die Schräglage sich in Bezug auf die Förderrichtung umkehrt.

In Förderrichtung betrachtet liegt damit eine etwa zickzackförmig verlaufende Aufeinanderfolge von Lotaustrittsöffnungen vor, die entsprechend ihrer Schräglage die ihnen zugewandten Anschlussstellen abwechselnd von jeweils der entgegengesetzten Seite mit Lot umspülen, so dass sich eine besonders intensive und allseitig wirksame Beaufschlagung der Anschlussstellen mit Lot ergibt. Das Wellenlöten von Leiterplatten mit dieser Lötdüse führt daher zu einer besonders sicheren Verlötung sämtlicher über die Lötdüse geführten Anschlussstellen, was für die gleichbleibend fehlerlose Herstellung von verlöteten Leiterplatten von entscheidender Bedeutung ist.

Dabei ist es vorteilhaft, die Schlitze einer Reihe in Bezug auf die Förderrichtung im wesentlichen zwischen den folgenden Enden der Schlitze in der nächsten Reihe anzuordnen. Hierdurch wird erreicht, dass von Reihe zu Reihe nebeneinander und aneinander anschließend liegende Bereiche der Leiterplatten von dem von den Lotaustrittsöffnungen gelieferten Lot beaufschlagt werden.

Es wirkt sich weiterhin vorteilhaft auf die gleichmäßige Umspülung der Anschlüsse aus, wenn die Schlitze in Bezug auf die Leiterplattenebene derart geneigt im Material der Lötdüse verlaufen, dass sich von Reihe zu Reihe Strömungsrichtungen des Lots ergeben, die abwechselnd geneigt auf die Ebene der Leiterplatten gerichtet sind, so dass sich von Reihe zu Reihe eine Strömungsrichtung des Lots ergibt, deren quer zur Förderrichtung gerichtete Komponente von Reihe zu Reihe entgegengesetzt verläuft.

Dabei kann man vorteilhaft zwischen den Reihen mit geneigt gerichteten Schlitzen eine Reihe mit im wesentlichen rechtwinklig zur Ebene der Leiterplatten ausgerichteten Schlitzen anordnen. Hierdurch erhält man weiterhin eine verbesserte Umspülung der zu verlötenden Anschlussstellen.

In den Figuren sind Ausführungsbeispiele der Erfindung dargestellt. Es zeigen:
- Fig. 1: die schematische Darstellung einer Wellenlötvorrichtung mit drei Reihen von Lotaustrittsöffnungen, die alle senkrecht auf die darüber hinweg geführten Leiterplatten gerichtet sind,
- Fig. 2: die prinzipiell gleiche Wellenlötvorrichtung mit drei Reihen von Lotaustrittsöffnungen, von denen die beiden äußeren nach links hin geneigt zur Leiterplattenebene und die mittlere senkrecht verlaufen,
- Fig. 3: ebenfalls eine Wellenlötvorrichtung in prinzipieller Übereinstimmung mit den Vorrichtungen gemäß Fig. 1 und 2, jedoch mit drei Reihen von Lotaustrittsöffnungen, von denen die linke nach links hin, die rechte nach rechts hin geneigt und die mittlere senkrecht zur Leiterplattenebene gerichtet ist.

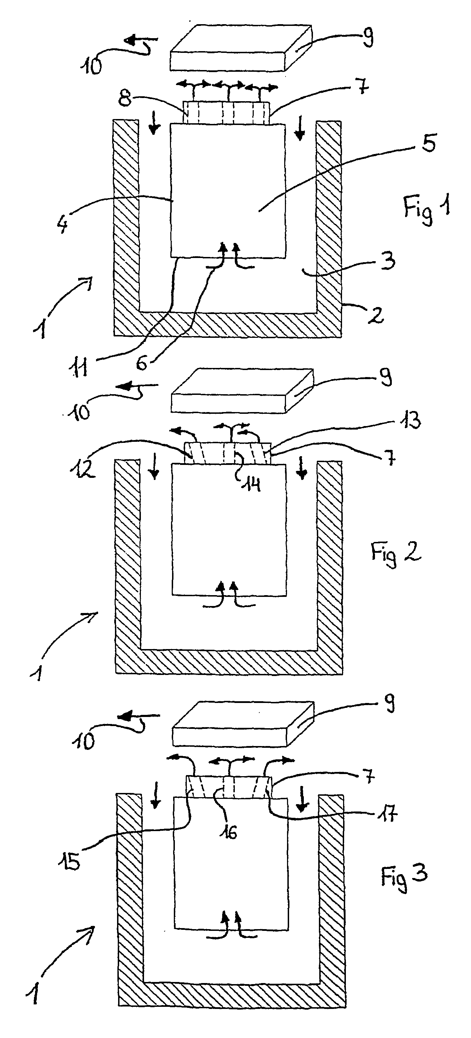

Die in der Fig. 1 dargestellte Wellenlötvorrichtung 1 besteht aus dem im Schnitt gezeichneten Behälter 2, der in seinem Innenraum 3 mit Lötmittel gefüllt ist. In dem Innenraum 3 befindet sich weiterhin der Düsenträger 4, der den Hohlraum enthält, in den das Lötmittel vom Innenraum 3 her gemäß den eingezeichneten Pfeilen 6 eintritt, womit sich innerhalb des Hohlraums eine beruhigte Strömung für das Lötmittel ergibt. Bei dieser Gestaltung handelt es sich um eine bekannte Anordnung.

Auf dem Düsenträger 4 ist die Lötdüse 7 angebracht, die von Lotaustrittsöffnungen 8 durchsetzt ist. Die Lotaustrittsöffnungen 8 sind hier in drei Reihen in der Lötdüse 7 angeordnet, wobei wegen der Schnittdarstellung jeweils nur eine Lotaustrittsöffnung 8 dargestellt ist. Die Lotaustrittsöffnungen 8 verlaufen im wesentlichen rechtwinklig zu einer über der Lötdüse 7 geführten Leiterplatte 9, an deren Unterseite sich in bekannter Weise die zu verlötenden Anschlussstellen befinden. Die Leiterplatte 9 ist hier in einem erheblichen Abstand von der Lötdüse 7 gezeichnet, was in der Praxis natürlich nicht der Fall ist. Durch die in den Fig. 1 bis 3 gewählte Darstellung soll vor allem die Wirkung der Anordnung der Lotaustrittsöffnungen 8 veranschaulicht werden, aus denen das Lötmittel im wesentlichen senkrecht zur Ebene der Leiterplatte 9 austritt und nach Auftreffen auf die Leiterplatte 9 symmetrisch zu den Lotaustrittsöffnungen 8 abströmt. Um die Förderrichtung der Leiterplatte 9 zu veranschaulichen, ist die Leiterplatte 9 perspektivisch gezeichnet und zusammen mit ihr der Pfeil 10, der die Förderrichtung der Leiterplatte 9 anzeigt. Innerhalb der Wellenlötvorrichtung 1 ergibt sich für das Lötmittel somit ein Kreislauf, beginnend in dem Innenraum 3 des Behälters 2, von dem aus das Lötmittel durch den Boden 11 gemäß den eingezeichneten Pfeilen in den Hohlraum 5 des Düsenträgers 4 eintritt, von wo aus das Lötmittel durch eine bekannte, nicht dargestellte Pumpenanordnung durch die Lotaustrittsöffnungen 8 herausgedrückt wird, um nach Überströmen der zugewandten Seiten der Leiterplatte 9 seitlich in den Innenraum 3 abzuströmen, wobei sich also jeweils oberhalb der Lötdüse 7 eine entsprechende Anzahl von Lötwellen ergibt.

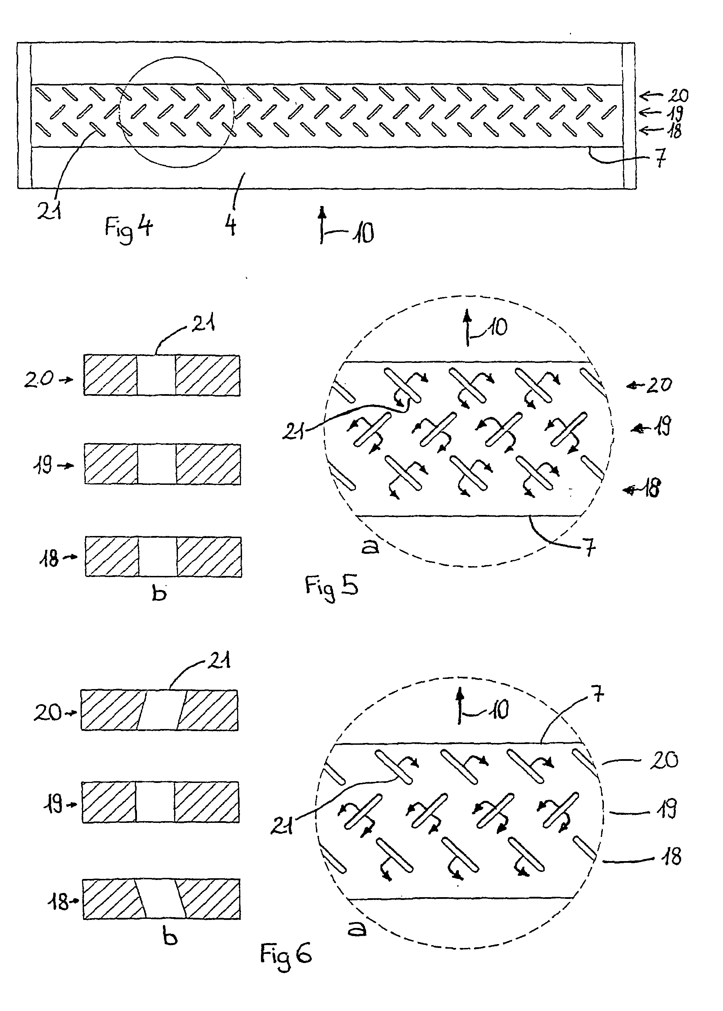

Die in der Fig. 2 dargestellte Wellenlötvorrichtung 1 entspricht hinsichtlich ihrer grundsätzlichen Struktur vollkommen derjenigen gemäß Fig. 1, so dass bezüglich der Funktion der Bestandteile der Wellenlötvorrichtung und den Umlauf des Lötmittels auf die vorstehenden Erläuterungen zu Fig. 1 verwiesen wird. Im Unterschied zu der Gestaltung gemäß Fig. 1 enthält bei der Vorrichtung gemäß Fig. 2 die Lötdüse 7 gegenüber der Ebene der Leiterplatte 9 eine geneigte Richtung, und zwar bei den beiden äußeren Reihen von Lotaustrittsöffnungen 12 und 13 im Sinne der zur Förderrichtung der Leiterplatte 9 nach links hin, während wie bei der Vorrichtung gemäß Fig. 1 die mittlere Reihe der Lotaustrittsöffnungen 14 senkrecht auf die Ebene der Leiterplatte 9 gerichtet ist. Es ergibt sich damit eine andere Art der Umspülung der Anschlussstellen an der Leiterplatte 9, die in Bezug auf die Anschlussstellen so gestaltet ist, dass sich bei den Reihen der einzelnen Anschlussstellen aufeinanderfolgend jeweils eine unterschiedliche Richtung der Umspülung der Anschlussstellen ergibt.

In der Fig. 3 ist eine weitere Variante der Gestaltung der Lötdüse 7 dargestellt, bei der die Lotaustrittsöffnungen 15 und 16 die gleiche Neigung bzw. senkrechte Ausrichtung wie gemäß Fig. 2 aufweisen, jedoch die Reihe mit den Lotaustrittsöffnungen 17 entgegensetzt zur Förderrichtung der Leiterplatte 9 geneigt ist. Hierdurch erhält man beim Überführen der Leiterplatte 9 über die Lötdüse 7 zunächst eine entgegengesetzt zur Förderrichtung der Leiterplatte 9 verlaufende Umspülung der Anschlussstellen, daraufhin mittels der Lotaustrittsöffnungen 16 eine symmetrische Umspülung und durch die Lotaustrittsöffnungen 15 eine in Förderrichtung verlaufende Umspülung, womit sich die Sicherheit einer allseitigen Umspülung der Anschlussstellen in besonders günstiger Weise ergibt.

In der Fig. 4 ist eine Draufsicht auf die Lötdüse 7, getragen von dem Düsenträger 4, dargestellt, und zwar mit drei Reihen 18, 19 und 20 von als Schlitze ausgebildeten Lotaustrittsöffnungen 21. Im Prinzip entspricht daher die Lötdüse 7 gemäß Fig. 4 den Lötdüsen 7 gemäß den Fig. 1 bis 3. In der Fig. 4 ist weiterhin durch den Pfeil 10 die Förderrichtung der über die Lötdüse 7 hinweggeführten Leiterplatten angedeutet, gemäß der die Leiterplatten zunächst die Reihe 18 der Lotaustrittsöffnung 21, danach die Reihe 19 und schließlich die Reihe 20 erreichen, wobei je nach der in Fig. 1 bis 3 dargestellten Neigung der Lotaustrittsöffnungen 21 in Bezug auf die Ebene der Leiterplatten eine entsprechende Umspülung der Anschlussstellen erfolgt. Aus Fig. 4 ergibt sich deutlich die Gestaltung der Lotaustrittsöffnungen 21 als Schlitze und deren Anordnung in Schräglage zur Förderrichtung 10, d.h. in Bezug auf die Förderrichtung 10 verläuft die Schräglage in der Reihe 18 von rechts nach links, danach in Reihe 19 von links nach rechts und schließlich in Reihe 20 wieder von rechts nach links, wobei die Schlitze in jeder Reihe parallel zueinander liegen. Dabei sind die Lotaustrittsöffnungen 21 von Reihe zu Reihe versetzt zueinander angeordnet. Hierdurch ergibt sich eine lückenlose Überspülung einer Leiterplatte, da sich eine jeweils folgende Reihe von Lotaustrittsöffnungen 21 im wesentlichen auf den Bereich erstreckt, der von der vorhergehenden Reihe von Lotaustrittsöffnungen auf einer Leiterplatte nicht beaufschlagt wird. Durch eine gewisse Überlappung der Lotaustrittsöffnungen bei deren Versatz von Reihe zu Reihe lässt sich auf diese Weise eine sichere Überspülung der gesamten Fläche einer Leiterplatte mit Sicherheit erzielen, wobei gegebenenfalls durch eine Variation hinsichtlich der Versatzlage über bestimmte Bereiche einer Leiterplatte eine besonders intensive Beaufschlagung der Leiterplatte erzielt werden kann.

Zusätzlich zu der aus Fig. 4 ersichtlichen Schräglage der Lotaustrittsöffnungen 21 ist natürlich darüber hinaus jede gewünschte Neigung der Lotaustrittsöffnungen 21 in Bezug auf die Ebene der Leiterplatten möglich, wie dies bereits anhand der Fig. 1 bis 3 dargestellt ist.

Um den gewünschten Effekt der sicheren Umspülung der Anschlussstellen an der Leiterplatte zu erzielen, kann eine Lötdüse mit nur zwei Reihen von Lotaustrittsöffnungen im Sinne der Gestaltung gemäß Fig. 4 ausreichend sein. Bei der Gestaltung der Lötdüse 7 mit drei Reihen von Lotaustrittsöffnungen 21 handelt es sich um ein bevorzugtes Ausführungsbeispiel. Demgegenüber sind natürlich auch Lötdüsen mit vier und mehr Reihen möglich, die dann im Sinne der Gestaltung gemäß Fig. 4 anzuordnen sind.

Der durch den in der Fig. 4 eingezeichneten Kreis dargestellte Bereich der Lötdüse 7 ist in den Fig. 5 und 6, ebenfalls von einem gestrichelten Kreis umgeben, vergrößert dargestellt, und zwar im Maßstab 2:1. Bezüglich der Schräglage der Lotaustrittsöffnungen 21 in Bezug auf die Förderrichtung 10 handelt es sich bei den in den Fig. 5a und 6a dargestellten Lötdüse 7 um die gleiche Gestaltung. Bezüglich der Neigung der Lotaustrittsöffnungen 21 im Material der Lötdüse 7, also in Bezug auf die Ausrichtung zur Ebene der Leiterplatten, liegen jedoch unterschiedliche Verhältnisse vor, wie sie in den Fig. 5b und 6b dargestellt sind. Aus den prinzipiellen Schnittdarstellungen in Fig. 5b und 6b ergibt sich die jeweils gewünschte Neigung der Lotaustrittsöffnungen 21. Gemäß Fig. 5b sind in allen drei Reihen 18, 19 und 20 die Lotaustrittsöffnungen im wesentlichen rechtwinklig zur Leiterplattenebene ausgerichtet, was im übrigen der Darstellung der Wellenlötvorrichtung 1 in Fig. 1 entspricht. Bei der Schnittdarstellung gemäß Fig. 6b ist eine jeweils unterschiedliche Neigung der Lotaustrittsöffnungen 21 gewählt, und zwar in Reihe 18 von rechts nach links, in Reihe 19 senkrecht und in Reihe 20 von links nach rechts, was der Gestaltung der Lötwellenvorrichtung gemäß Fig. 3 entspricht.

Die im wesentlichen eingehaltene Richtung des Austritt des Lötmittels aus den Lotaustrittsöffnungen 21 ist darüber hinaus mittels der in den Fig. 5a und 6a eingezeichneten Pfeile angedeutet. Gemäß Fig. 5a ergibt sich in den Reihen 18, 19 und 20 jeweils die gleiche Austrittsrichtung, nämlich beiderseits der Lotaustrittsöffnungen 21 in symmetrischer Weise. Dagegen ist bei der Lötdüse 7 gemäß Fig. 6a eine unterschiedliche Neigung gewählt, die in Reihe 18 zu einem Lötaustritt entgegen der Förderrichtung und der Reihe 20 der Förderrichtung folgend führt, wozu die betreffenden an den Lotaustrittsöffnungen 21 eingezeichneten Pfeile in Reihe 18 nach unten und in Reihe 20 nach oben gerichtet sind. In Reihe 19 ergibt sich ein symmetrischer Lötaustritt wegen der in dieser Reihe rechtwinklig zu den Leiterplatten gerichteten Lotaustrittsöffnungen 21.

Zur Erläuterung der Wirkungsweise der erfindungsgemäßen Gestaltung der Lötdüse 7 sei weiterhin auf die Darstellung in 7 verwiesen, in der der durch den Ring aus Fig. 4 dargestellte Ausschnitt der Lötdüse 7 in perspektivischer Sicht gezeichnet ist. Bei der Schräglage der einzelnen Lotaustrittsöffnungen 21 handelt es sich um die gleiche Gestaltung, wie in Zusammenhang mit den Fig. 4 bis 6 dargestellt. Bezüglich der Neigung der Lotaustrittsöffnung 21 im Material der Lötdüse 7 liegen jedoch, unterschiedlich zu der Darstellung in Fig. 6, insofern entgegengesetzte Verhältnisse vor, als bei der Anordnung gemäß 7 eine Leiterplatte 9 (dargestellt durch einen mit starker Linienführung umfassten Rahmen) zunächst auf die Reihe 18 von Lotaustrittsöffnungen trifft, aus der das Lötmittel der Bewegung der Leiterplatte 9 folgend austritt, danach sowohl entgegengesetzt zur Förderrichtung als auch mit der Förderrichtung und schließlich in Reihe 20 wieder entgegengesetzt zur Förderrichtung. Die Neigungen der Lotaustrittsöffnungen 21 in den Reihen 18 bis 20 sind durch die prinzipielle Schnittdarstellung in Fig. 7b gezeigt. Es ist also möglich, innerhalb einer Reihe von Lotaustrittsöffnungen 21 die Neigung der einzelnen Lotaustrittsöffnungen bedarfsbezogen unterschiedlich zu wählen.

Die Leiterplatte 9 trägt den integrierten Schaltkreis 22, dessen Anschlussstellen aufeinanderfolgend von den Lotaustrittsöffnungen 21 der Reihe 18, danach der Reihe 19 und schließlich der Reihe 20 beaufschlagt werden. Das Ergebnis ist eine besonders intensive Umspülung der Anschlussstellen von vielen Richtungen, so dass die Verlötung der Anschlussstellen in besonders sicherer Weise herbeigeführt wird.

### Bezugszeichen-Liste

- 1: Lötvorrichtung
- 2: Behälter
- 3: Innenraum
- 4: Düsenträger
- 5: Hohlraum
- 6: Pfeile
- 7: Lötdüse
- 8: Lotaustrittsöffnung
- 9: Leiterplatte
- 10: Pfeilförderrichtung
- 11: Boden
- 12: Lotaustrittsöffnung
- 13: Obere Lotaustrittsöffnung
- 14: Mittlere Lotaustrittsöffnung
- 15: Lotaustrittsöffnung
- 16: Lotaustrittsöffnung
- 17: Lotaustrittsöffnung
- 18: Lotaustrittsöffnung
- 19: Lotaustrittsöffnung
- 20: Lotaustrittsöffnung
- 21: Lotaustrittsöffnung (Schlitz)
- 22: Integrierter Schaltkreis

## Patentansprüche

1. Lötdüse (7) zum Wellenlöten von Leiterplatten (9) mit elektrischen Bauelementen, die quer zur Förderrichtung (10) der Leiterplatten (9) angeordnete Reihen (18, 19, 20) von Lotaustrittsöffnungen aufweist, die in Förderrichtung von Reihe zu Reihe zueinander versetzt liegen, **dadurch gekennzeichnet, dass** mindestens zwei Reihen (18, 19, 20) von jeweils als Schlitze (21) ausgebildeten Lotaustrittsöffnungen vorgesehen sind und in jeder Reihe die Schlitze (21) parallel zueinander in Schräglage zur Förderrichtung (10) angeordnet sind, wobei von Reihe zu Reihe die Schräglage sich in Bezug auf die Förderrichtung (10) umkehrt.

2. Lötdüse nach Anspruch 1, **dadurch gekennzeichnet, dass** die Schlitze (21) einer Reihe in Bezug auf die Förderrichtung im wesentlichen zwischen den folgenden Enden der Schlitze der nächsten Reihe liegen.

3. Lötdüse nach Anspruch 1 oder 2, **dadurch gekennzeichnet, dass** die Schlitze in Bezug auf die Ebene der Leiterplatten (9) derart geneigt im Material der Lötdüse (7) verlaufen, dass sich von Reihe zu Reihe Strömungsrichtungen des Lots ergeben, die abwechselnd geneigt auf die Leiterplatten (9) gerichtet sind, so dass sich bei nacheinander angeordneten Reihen eine Strömungsrichtung des Lots ergibt, deren Komponente quer zur Förderrichtung (10) von Reihe zu Reihe entgegengesetzt verläuft.

4. Lötdüse nach Anspruch 1, **dadurch gekennzeichnet, dass** zwischen Reihen mit geneigt gerichteten Schlitzen eine Reihe mit im wesentlichen rechtwinklig zur Ebene der Leiterplatten (9) gerichteten Schlitzen angeordnet sind.

## Claims

1. Solder nozzle (7) for the wave soldering of printed-circuit boards (9) with electrical components, said solder nozzle (7) having rows (18, 19, 20) of solder outlet openings disposed transversely to the conveying direction (10) of the printed-circuit boards (9), said rows (18, 19, 20) of solder outlet openings being offset with respect to each other from row to row in the conveying direction, **characterized in that** at least two rows (18, 19, 20) of solder outlet openings, each in the form of slits (21), are provided and in each row the slits (21) are disposed parallel to each other at an oblique position with respect to the conveying direction (10), the oblique position being reversed from row to row with respect to the conveying direction (10).

2. Solder nozzle according to claim 1, **characterized in that** the slits (21) of one row are disposed with respect to the conveying direction substantially between the following ends of the slits of the next row.

3. Solder nozzle according to claim 1 or 2, **characterized in that**, with respect to the plane of the printed-circuit boards (9), the slits are inclined in the material of the solder nozzle (7) in such a manner that, from row to row, there result flow directions of the solder which are directed in alternately inclined manner at the printed-circuit boards (9), with the result that, in successive rows, there results a flow direction of the solder whose component transverse to the conveying direction (10) runs in opposite directions from row to row.

4. Solder nozzle according to claim 1, **characterized in that** disposed between rows with inclined slits is a row with slits aligned substantially at right angles to the plane of the printed-circuit boards (9).

## Revendications

1. Buse de soudage (7) pour soudage à la vague de circuits imprimés (9) avec des composants électroniques, qui comporte des rangées (18, 19, 20) d'ouvertures de sortie de soudure disposées transversalement à la direction d'avance (10) du circuit imprimé (9) qui sont étagées entre elles dans la direction d'avance d'une rangée à l'autre, **caractérisée en ce qu'**au moins deux rangées (18, 19, 20) sont pourvues d'ouvertures de sortie de soudure respectivement en forme de fentes (21) et dans chaque rangée les fentes (21) sont configurées parallèlement entre elles obliquement par rapport à la direction d'avance (10), de sorte que d'une rangée à l'autre l'obliquité soit inversée par rapport à la direction de progression (10).

2. Buse de soudage selon la revendication 1, **caractérisée en ce que** les fentes (21) d'une rangée s'étendent dans leur ensemble entre les extrémités suivantes des fentes de la rangée suivante par rapport à la direction d'avance.

3. Buse de soudage selon la revendication 1 ou 2, **caractérisée en ce que** les fentes par rapport au plan du circuit imprimé (9) traversent le matériau de la buse de soudage (7) d'une manière à présenter d'une rangée à l'autre des directions de courant de soudure qui sont dirigées obliquement de façon alternée sur le circuit imprimé (9), de façon à présenter pour les rangées disposées en succession une direction de courant de soudure dont les composantes transversalement à la direction de progression (10) s'étendent en opposition d'une rangée à la suivante.

4. Buse de soudage selon la revendication 1, **caractérisée en ce qu'**entre des rangées avec des fentes orientées obliquement est disposée une rangée avec des fentes dirigées dans leur ensemble perpendiculairement au plan du circuit imprimé (9).
